# EUROPEAN PATENT APPLICATION

(11) **EP 4 597 360 A1**
(43) Date of publication of application: **06.08.2025**
(21) Application number: 25152249.6
(22) Date of filing: 16.01.2025
(51) Int. Cl.: G06N 3/006, G06N 5/022, G06N 20/00

(54) **MULTI-SOURCED MACHINE LEARNING MODEL-BASED ARTIFICIAL INTELLIGENCE CHARACTER TRAINING AND DEVELOPMENT**

(30) Priority: 05.02.2024 US 202418433163
(71) Applicant: Disney Enterprises, Inc., Burbank, CA 91521 (US)
(72) Inventor: PAETZEL-PRUESMANN, Maike, Burbank, CA 91521 (US); LEHMAN, Jill Fain, Burbank, CA 91521 (US); BASH, Stephen, Burbank, CA 91521 (US); KENNEDY, James R., Burbank, CA 91521 (US); GOMEZ, Celia, Burbank, CA 91521 (US)
(74) Representative: Dr. Weitzel & Partner

(57) **Abstract**

A system includes a hardware processor configured to execute software code to receive interaction data identifying an action and personality profiles corresponding respectively to multiple participant cohorts in the action, generate, using the interaction data, an interaction graph of behaviors of the participant cohorts in the action, simulate, using a behavior model, participation of each of the participant cohorts in the action to provide a predicted interaction graph, and compare the predicted and generated interaction graphs to identify a similarity score for the predicted interaction graph relative to the generated interaction graph. When the similarity score satisfies a similarity criterion, the software code is executed to train, using the behavior model, an artificial intelligence character for interactions. When the similarity score fails to satisfy the similarity criterion, the software code is executed to modify the behavior model based on one or more differences between the predicted and generated interaction graphs.

## Description

The present invention relates to a method and system for training and development of an artificial intelligence character.

### BACKGROUND

Advances in artificial intelligence (AI) have led to the development of a variety of systems providing AI characters that simulate social agents. However, composing dialogue for an AI character requires an understanding of not only what the AI character should say or do, but also anticipating how one or more human users will respond during a particular interaction. Given the variability of language, personality profiles, demographics, and the context in which an interaction may take place, generating realistic interactive behavior by an AI character during a single interaction may require the processing of hundreds or thousands of data points. As a result, it is impossible for human being to verify all of the possible interaction scenarios without reliance on one or more sophisticated computational models. Consequently, there is a need in the art for a multi-sourced machine learning model-based solution for AI character training and development.

The invention is defined by the features of the independent claims. The dependent claims describe preferred embodiments. Further embodiments are disclosed in the following description.

Embodiments of the invention are as follows:
A method comprising:
receiving interaction data, the interaction data identifying an action and a plurality of personality profiles corresponding respectively to a plurality of participant cohorts in the action;
generating, using the interaction data, an interaction graph of behaviors of the plurality of participant cohorts in the action;
simulating, using a behavior model, participation of each of the plurality of participant cohorts in the action to provide a predicted interaction graph for the plurality of participant cohorts;
comparing the predicted interaction graph and the generated interaction graph to identify a similarity score for the predicted interaction graph relative to the generated interaction graph;
when the similarity score satisfies a similarity criterion, training, using the behavior model, an artificial intelligence (AI) character for interactions; and
when the similarity score fails to satisfy the similarity criterion, modifying the behavior model, based on one or more differences between the predicted interaction graph and the generated interaction graph.

Preferably the method further comprising:
when the similarity score fails to satisfy the similarity criterion, repeating the simulating and the comparing until another similarity score for another predicted interaction graph satisfies the similarity criterion; and
training, using a modified behavior model providing the another predicted interaction graph, the AI character for the interactions.

Preferably the method, wherein the action comprises at least one of a same speech directed at each of the plurality of participant cohorts or a same event engaged in by each of the plurality of participant cohorts, and wherein the predicted interaction graph includes a plurality of edges each identifying an intent of one or more of the plurality of participant cohorts.

Preferably the method, wherein the plurality of edges each further identifies at least one of an utterance, a facial expression, or a gesture attributed to one or more of the plurality of participant cohorts.

Preferably the method, wherein the behavior model comprises at least one of a multimodal foundation model or a large-language model.

Preferably the method, further comprising:
receiving qualitative feedback describing a plurality of interaction experiences by a plurality of human users with the trained AI character;
segmenting the qualitative feedback, using a first machine learning (ML) model of a plurality of trained ML models, into a plurality of segments each corresponding respectively to a single interaction specific topic;
analyzing, using the qualitative feedback and at least one of the first ML model or a second ML model of the plurality of trained ML models, a respective sentiment of each of one or more of the plurality of human users with respect to each interaction specific topic;
obtaining interaction quality evaluation data generated by a control system for the AI character;
identifying, using the interaction quality evaluation data and based on the analyzing, tuning data for improving an interaction performance by the AI character; and
tuning, based on the tuning data, one of the behavior model or the modified behavior model.

Preferably the method further comprising:
receiving quantitative feedback data rating the plurality of interaction experiences by the plurality of human users with the trained AI character;
wherein identifying the tuning data further uses the quantitative feedback data.

A system comprising a hardware processor and a system memory storing a software code, the hardware processor being adapted to execute the software to perform the method as disclosed herein.

Further embodiments of the invention are as follows:
A system comprising:
a hardware processor and a memory storing a software code;
the hardware processor configured to execute the software code to:
   receive interaction data, the interaction data identifying an action and a plurality of personality profiles corresponding respectively to a plurality of participant cohorts in the action;
   generate, using the interaction data, an interaction graph of behaviors of the plurality of participant cohorts in the action;
   simulate, using a behavior model, participation of each of the plurality of participant cohorts in the action to provide a predicted interaction graph for the plurality of participant cohorts;
   compare the predicted interaction graph and the generated interaction graph to identify a similarity score for the predicted interaction graph relative to the generated interaction graph;
   when the similarity score satisfies a similarity criterion, train, using the behavior model, an artificial intelligence (AI) character for interactions; and
   when the similarity score fails to satisfy the similarity criterion, modify the behavior model based on one or more differences between the predicted interaction graph and the generated interaction graph.

Preferably the system, wherein the hardware processor is further configured to execute the software code to:
when the similarity score fails to satisfy the similarity criterion, repeat the simulating and the comparing until another similarity score for another predicted interaction graph satisfies the similarity criterion; and
train, using a modified behavior model providing the another predicted interaction graph, the AI character for the interactions.

Preferably the system, wherein the action comprises at least one of a same speech directed at each of the plurality of participant cohorts or a same event engaged in by each of the plurality of participant cohorts, and wherein the predicted interaction graph includes a plurality of edges each identifying an intent of one or more of the plurality of participant cohorts.

Preferably the system, wherein the plurality of edges each further identifies at least one of an utterance, a facial expression, or a gesture attributed to one or more of the plurality of participant cohorts.

Preferably the system, wherein the behavior model comprises at least one of a multimodal foundation model or a large-language model.

Preferably the system, further comprising a plurality of trained machine learning (ML) models, wherein the hardware processor is further configured to execute the software code to:
receive qualitative feedback describing a plurality of interaction experiences by a plurality of human users with the trained AI character;
segment the qualitative feedback, using a first ML model of the plurality of trained ML models, into a plurality of segments each corresponding respectively to a single interaction specific topic;
analyze, using the qualitative feedback and at least one of the first ML model or a second ML model of the plurality of trained ML models, a respective sentiment of each of one or more of the plurality of human users with respect to each interaction specific topic;
obtain interaction quality evaluation data generated by a control system for the AI character;
identify, using the interaction quality evaluation data and based on the analyzing, tuning data for improving an interaction performance by the AI character; and
tune, based on the tuning data, one of the behavior model or the modified behavior model.

Preferably the system, wherein the hardware processor is further configured to execute the software code to:
receive quantitative feedback data rating the plurality of interaction experiences by the plurality of human users with the trained AI character;
wherein identifying the tuning data further uses the quantitative feedback data.

A method for use by a system having hardware processor and a memory storing a software code, the method comprising:
receiving, by the software code executed by the hardware processor, interaction data, the interaction data identifying an action and a plurality of personality profiles corresponding respectively to a plurality of participant cohorts in the action;
generating, by the software code executed by the hardware processor and using the interaction data, an interaction graph of behaviors of the plurality of participant cohorts in the action;
simulating, by the software code executed by the hardware processor and using a behavior model, participation of each of the plurality of participant cohorts in the action to provide a predicted interaction graph for the plurality of participant cohorts;
comparing, by the software code executed by the hardware processor, the predicted interaction graph and the generated interaction graph to identify a similarity score for the predicted interaction graph relative to the generated interaction graph;
when the similarity score satisfies a similarity criterion, training, by the software code executed by the hardware processor and using the behavior model, an artificial intelligence (AI) character for interactions; and
when the similarity score fails to satisfy the similarity criterion, modifying the behavior model, by the software code executed by the hardware processor based on one or more differences between the predicted interaction graph and the generated interaction graph.

Preferably the method further comprising:
when the similarity score fails to satisfy the similarity criterion, repeating, by the software code executed by the hardware processor, the simulating and the comparing until another similarity score for another predicted interaction graph satisfies the similarity criterion; and
training, by the software code executed by the hardware processor and using a modified behavior model providing the another predicted interaction graph, the AI character for the interactions.

Preferably the method, wherein the action comprises at least one of a same speech directed at each of the plurality of participant cohorts or a same event engaged in by each of the plurality of participant cohorts, and wherein the predicted interaction graph includes a plurality of edges each identifying an intent of one or more of the plurality of participant cohorts.

Preferably the method, wherein the plurality of edges each further identifies at least one of an utterance, a facial expression, or a gesture attributed to one or more of the plurality of participant cohorts.

Preferably the method, wherein the behavior model comprises at least one of a multimodal foundation model or a large-language model.

Preferably the method, further comprising:
receiving, by the software code executed by the hardware processor, qualitative feedback describing a plurality of interaction experiences by a plurality of human users with the trained AI character;
segmenting the qualitative feedback, by the software code executed by the hardware processor and using a first machine learning (ML) model of a plurality of trained ML models, into a plurality of segments each corresponding respectively to a single interaction specific topic;
analyzing, by the software code executed by the hardware processor and using the qualitative feedback and at least one of the first ML model or a second ML model of the plurality of trained ML models, a respective sentiment of each of one or more of the plurality of human users with respect to each interaction specific topic;
obtaining, by the software code executed by the hardware processor, interaction quality evaluation data generated by a control system for the AI character;
identifying, by the software code executed by the hardware processor and using the interaction quality evaluation data and based on the analyzing, tuning data for improving an interaction performance by the AI character; and
tuning, by the software code executed by the hardware processor based on the tuning data, one of the behavior model or the modified behavior model.

Preferably the method further comprising:
receiving, by the software code executed by the hardware processor, quantitative feedback data rating the plurality of interaction experiences by the plurality of human users with the trained AI character;
wherein identifying the tuning data further uses the quantitative feedback data.

A computer-readable non-transitory medium having stored thereon instructions, which when executed by a hardware processor, instantiate a method comprising:
receiving interaction data, the interaction data identifying an action and a plurality of personality profiles corresponding respectively to a plurality of participant cohorts in the action;
generating, using the interaction data, an interaction graph of behaviors of the plurality of participant cohorts in the action;
simulating, using a behavior model, participation of each of the plurality of participant cohorts in the action to provide a predicted interaction graph for the plurality of participant cohorts;
comparing the predicted interaction graph and the generated interaction graph to identify a similarity score for the predicted interaction graph relative to the generated interaction graph;
when the similarity score satisfies a similarity criterion, training, using the behavior model, an artificial intelligence (AI) character for interactions;
when the similarity score fails to satisfy the similarity criterion, modifying the behavior model based on one or more differences between the predicted interaction graph and the generated interaction graph.

Preferably the computer-readable non-transitory medium, the method further comprising:
when the similarity score fails to satisfy the similarity criterion, repeating the simulating and the comparing until another similarity score for another predicted interaction graph satisfies the similarity criterion; and
training, using a modified behavior model providing the another predicted interaction graph, the AI character for the interactions.

Preferably the computer-readable non-transitory medium, wherein the action comprises at least one of a same speech directed at each of the plurality of participant cohorts or a same event engaged in by each of the plurality of participant cohorts, and wherein the predicted interaction graph includes a plurality of edges each identifying an intent of one or more of the plurality of participant cohorts.

Preferably the computer-readable non-transitory medium, wherein the plurality of edges each further identifies at least one of an utterance, a facial expression, or a gesture attributed to one or more of the plurality of participant cohorts.

Preferably the computer-readable non-transitory medium, further comprising:
receiving qualitative feedback describing a plurality of interaction experiences by a plurality of human users with the trained AI character;
segmenting the qualitative feedback, using a first trained machine learning (ML) model, into a plurality of segments each corresponding respectively to a single interaction specific topic;
analyzing, using the qualitative feedback and at least one of the first trained ML model or a second trained ML model, a respective sentiment of each of one or more of the plurality of human users with respect to each interaction specific topic;
obtaining interaction quality evaluation data generated by a control system for the AI character;
identifying, based on the analyzing, tuning data for improving an interaction performance by the AI character; and
tuning, based on the tuning data, one of the behavior model or the modified behavior model.

Preferably the computer-readable non-transitory medium, the method further comprising:
receiving quantitative feedback data rating the plurality of interaction experiences by the plurality of human users with the trained AI character;
wherein identifying the tuning data further uses the quantitative feedback data.

### BRIEF DESCRIPTION OF THE DRAWINGS

Figure 1 shows an exemplary system for performing multi-sourced machine learning (ML) model-based artificial intelligence (AI) character training and development, according to one implementation;
Figure 2 shows an exemplary diagram depicting multi-sourced ML model-based AI character training prior to deployment of a trained AI character, according to one implementation;
Figure 3A shows a flowchart presenting an exemplary method for performing multi-sourced ML model-based AI character training prior to deployment of a trained AI character, according to one implementation;
Figure 3B shows additional actions for extending the method outlined in Figure 3A, according to one implementation;
Figure 4 shows an exemplary diagram depicting multi-sourced ML model-based AI character training and development after deployment of a trained AI character, according to one implementation; and
Figure 5 shows a flowchart presenting an exemplary method for performing multi-sourced ML model-based AI character training and development after deployment of a trained AI character, according to one implementation.

### DETAILED DESCRIPTION

The following description contains specific information pertaining to implementations in the present disclosure. One skilled in the art will recognize that the present disclosure may be implemented in a manner different from that specifically discussed herein. The drawings in the present application and their accompanying detailed description are directed to merely exemplary implementations. Unless noted otherwise, like or corresponding elements among the figures may be indicated by like or corresponding reference numerals. Moreover, the drawings and illustrations in the present application are generally not to scale, and are not intended to correspond to actual relative dimensions.

The present application discloses systems and methods for performing multi-sourced machine learning (ML) model-based artificial intelligence (AI) character training and development. Moreover, in some implementations, the present solution for performing multi-sourced ML model-based AI character training and development may advantageously be implemented as automated systems and method.

As used in the present application, the terms "automation," "automated" and "automating" refer to systems and processes that do not require the participation of a human system administrator. Although in some implementations the AI character training and development solution disclosed herein may be monitored or even managed by a human AI character system designer, that human involvement is optional. Thus, the methods described in the present application may be performed under the control of hardware processing components of the disclosed systems.

In addition, as defined in the present application, an AI character refers to a non-human social agent that exhibits behavior and intelligence that can be perceived by a human user whom interacts with the AI character as having a distinctive personality. AI characters may be implemented as machines or other physical devices, such as robots or toys, or may be virtual entities, such as visually projected digital characters, for example those depicted by animations on a screen. AI characters may speak with their own characteristic voice (e.g., phonation, pitch, loudness, rate, dialect, accent, rhythm, inflection and the like) such that a human observer recognizes the AI character as a unique individual. AI characters may exhibit characteristics of living or historical characters, fictional characters from literature, film and the like, or simply unique individuals that exhibit patterns that are recognizable by humans as a personality.

It is noted that, as defined in the present application, the term "non-verbal vocalization" refers to vocalizations that are not language based, such as a grunt, sigh, or laugh to name a few examples, while a "non-vocal sound" refers to a hand clap or other manually generated sound. It is also noted that, as used herein, the term "prosody" has its conventional meaning and refers to the stress, rhythm, and intonation of spoken language.

It is further noted that, as defined in the present application, the expression "participant cohort" refers to a particular human individual, an individual AI character, or a group of humans and/or AI characters sharing communication habits or traits that are idiosyncratic or otherwise characteristic of that participant cohort. Accordingly, a "participant cohort personality profile" may include personality type or persona (e.g., introversion versus extroversion), as well as, in some implementations, real or simulated previous interactions of an individual with one or more AI characters. In addition, the expression "context for an action" can refer to activities by a participant cohort previous to or concurrently with speech directed to the participant cohort or an event engaged in by the participant cohort, a goal or motivation of the participant cohort, environmental factors such as weather and location, and the subject matter of a communication with the participant cohort.

By way of overview, it is noted that the process of training and continuing to develop an AI character for social interaction faces three major challenges. First, before the AI character is deployed for use, it is typically difficult for AI character system designers to estimate and prepare for what participant cohorts included in a target audience for the AI character may say and how they may interact with the AI character. Second, even after deployment of the AI character, there presently exist few mechanisms for gaining insight into which portions of an interaction human users typically find to be pleasing, which generate misunderstanding, and which are simply awkward for human users to navigate. Third, a particular AI character may have an affiliation with a content franchise that is actively expanding or otherwise evolving, or may have a prior interaction history with a human user or cohort of users, which may result in human users having expectations of what an AI character is "aware of' and is capable of responding to that change over time. The aforementioned challenges require (i) the development of realistic test conditions to ensure successful AI character deployments and updates of the AI character interactions and content, and (ii) an effective feedback loop that enables the incorporation of experiences from live interactions with human users into the behavior of the AI character, as well as the content included in the knowledge base of the AI character.

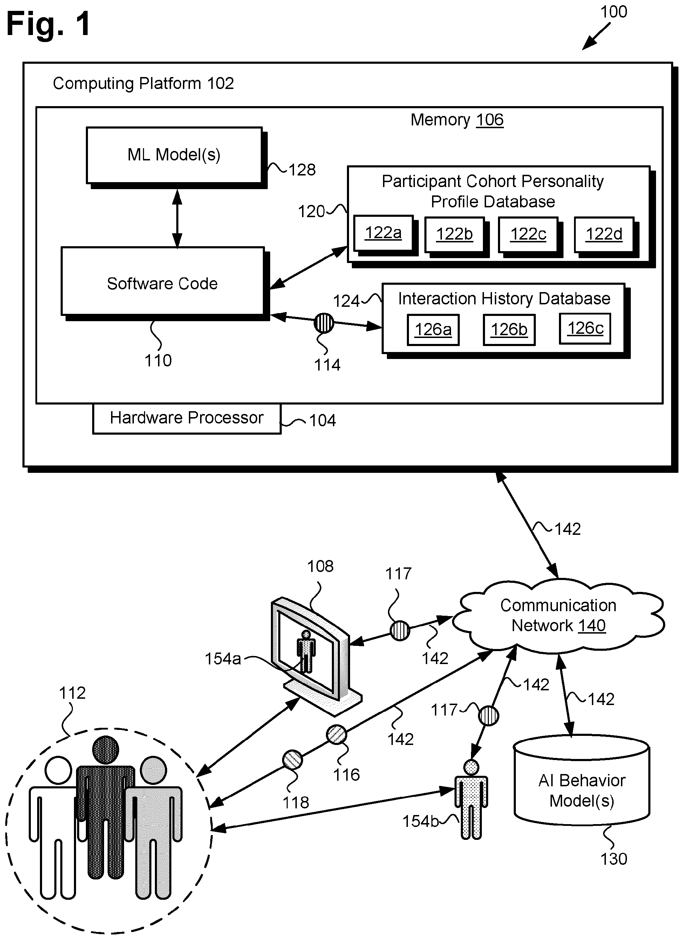

Figure 1 shows exemplary system 100 for performing multi-sourced ML model-based AI character training and development, according to one implementation. As shown in Figure 1, system 100 includes computing platform 102 having hardware processor 104, and system memory 106 implemented as a non-transitory storage medium. According to the present exemplary implementation, system memory 106 stores software code 110, participant cohort personality database 120 including participant cohort personality profiles 122a, 122b, 122c and 122d, interaction history database 124 including interaction histories 126a, 126b and 126c, and one or more trained ML models 128 (hereinafter "trained ML model(s) 128"), which may be or include one or more multimodal foundation models and/or one or more large-language models for example.

It is noted that, as defined in the present application, the expression "ML model" refers to a computational model for making predictions based on patterns learned from samples of data or "training data." Various learning algorithms can be used to map correlations between interaction data and output data. These correlations form the computational model that can be used to make future predictions on new interaction data. Such a predictive model may include one or more logistic regression models, Bayesian models, or artificial neural networks (NNs), large-language models, multimodal foundation models, as well as various classical AI models, to name a few examples.

As further shown in Figure 1, system 100 is implemented within a use environment including communication network 140 providing network communication links 142, and one or more AI behavior models 130 (hereinafter "AI behavior model(s) 130"), which may be or include one or more multimodal foundation models and/or one or more large-language models for example, communicatively coupled to system 100 via communication network 140 and network communication links 142. Also shown in Figure 1 are AI characters 154a and 154b, display 108, human users 112 interacting with one or both of AI characters 154a and 154b, interaction data 114 received by software code 110 from interaction history database, qualitative feedback 116 received by system 100 from at least some of human users 112, interaction quality evaluation data 117, and optional quantitative feedback data 118 received from at least some of human users 112. With respect to qualitative feedback 116, it is noted that qualitative feedback 116 may include spoken or written responses to questions or other prompts provided by at least some of human users 112, or text commentary submitted by at least some of human users 112.

Although Figure 1 depicts AI character 154a as being instantiated as a digital character rendered on display 108, and depicts AI character 154b as a robot, those representations are provided merely by way of example. In other implementations, one or both of AI characters 154a and 154b may be instantiated by various devices, such as audio speakers, displays, figurines, or augmented reality (AR) or virtual reality (VR) devices, to name a few examples. It is also noted that AI character 154b corresponds in general to AI character 154a and may include any of the features attributed to AI character 154a. Moreover, although not shown in Figure 1, like computing platform 102, in some implementations AI character 154b may include hardware processor 104, and system memory 106 storing software code 110, participant cohort personality database 120, interaction history database 124, and trained ML model(s) 128.

Furthermore, although Figure 1 depicts three human users 112 and two AI characters 154a and 154b, that representation is merely exemplary. In other implementations, one AI character, two AI characters, or more than two AI characters may engage in an interaction with one or more human users corresponding to human users 112. It is also noted that although Figure 1 depicts four participant cohort personality profiles 122a, 122b, 122c and 122d, and three interaction histories 126a, 126b and 126c, participant cohort personality database 120 will typically store tens, hundreds, or thousands of participant cohort personality profiles, while interaction history database 124 will typically store hundreds or thousands of interaction histories.

Moreover, it is noted that each of interaction histories 126a, 126b and 126c may be an interaction history dedicated to cumulative interactions of an AI character with the same participant cohort, or to one or more distinct temporal sessions over which an interaction of one or more AI characters and a participant cohort extends. Furthermore, while in some implementations an interaction history stored in interaction history database 124 may be comprehensive with respect to interactions by a participant cohort with a particular AI character or characters, in other implementations, an interaction history stored in interaction history database 124 may retain only a predetermined number of the most recent interactions by a participant cohort with an AI character.

It is noted that the data describing previous interactions and retained in interaction history database 124 is preferably exclusive of personally identifiable information (PII) of individual members of the participant cohorts. Thus, interaction history database 124 does not require the retention of information describing the age, gender, race, ethnicity, or any other PII of any member of a participant cohort with whom an AI character has conversed or otherwise interacted.

Although the present application refers to software code 110, participant cohort personality database 120, interaction history database 124, and trained ML model(s) 128 as being stored in system memory 106 for conceptual clarity, more generally, system memory 106 may take the form of any computer-readable non-transitory storage medium. The expression "computer-readable non-transitory storage medium," as defined in the present application, refers to any medium, excluding a carrier wave or other transitory signal that provides instructions to hardware processor 104 of computing platform 102. Thus, a computer-readable non-transitory medium may correspond to various types of media, such as volatile media and non-volatile media, for example. Volatile media may include dynamic memory, such as dynamic random access memory (dynamic RAM), while non-volatile memory may include optical, magnetic, or electrostatic storage devices. Common forms of computer-readable non-transitory storage media include, for example, optical discs, RAM, programmable read-only memory (PROM), erasable PROM (EPROM), and FLASH memory.

Moreover, in some implementations, system 100 may utilize a decentralized secure digital ledger in addition to system memory 106. Examples of such decentralized secure digital ledgers may include a blockchain, hashgraph, directed acyclic graph (DAG), and Holochain^{®} ledger, to name a few. In use cases in which the decentralized secure digital ledger is a blockchain ledger, it may be advantageous or desirable for the decentralized secure digital ledger to utilize a consensus mechanism having a proof-of-stake (PoS) protocol, rather than the more energy intensive proof-of-work (PoW) protocol.

It is further noted that although Figure 1 depicts software code 110, participant cohort personality database 120, interaction history database 124, and trained ML model(s) 128 as being co-located in system memory 106, that representation is also merely provided as an aid to conceptual clarity. More generally, system 100 may include one or more computing platforms 102, such as computer servers for example, which may be co-located, or may form an interactively linked but distributed system, such as a cloud based system, for instance. As a result, hardware processor 104 and system memory 106 may correspond to distributed processor and memory resources within system 100. Consequently, in some implementations, software code 110, participant cohort personality database 120, interaction history database 124, and trained ML model(s) 128 may be stored remotely from one another on the distributed memory resources of system 100. Furthermore, although Figure 1 depicts AI behavior model(s) 130 as being one or more remote resources accessible by system 100 communication network 140 and network communication links 142, in some implementations, one or more of AI behavior model(s) 130 may be a component or components of system 100 and may be stored within system memory 106.

Hardware processor 104 may include multiple hardware processing units, such as one or more central processing units, one or more graphics processing units, and one or more tensor processing units, one or more field-programmable gate arrays (FPGAs), custom hardware for machine-learning training or inferencing, and an application programming interface (API) server, for example. By way of definition, as used in the present application, the terms "central processing unit" (CPU), "graphics processing unit" (GPU), and "tensor processing unit" (TPU) have their customary meaning in the art. That is to say, a CPU includes an Arithmetic Logic Unit (ALU) for carrying out the arithmetic and logical operations of computing platform 102, as well as a Control Unit (CU) for retrieving programs, such as software code 110, from system memory 106, while a GPU may be implemented to reduce the processing overhead of the CPU by performing computationally intensive graphics or other processing tasks. A TPU is an application-specific integrated circuit (ASIC) configured specifically for AI applications such as machine learning modeling.

In some implementations, computing platform 102 may correspond to one or more web servers, accessible over a packet-switched network such as the Internet, for example. Alternatively, computing platform 102 may correspond to one or more computer servers supporting a private wide area network (WAN), local area network (LAN), or included in another type of limited distribution or private network. In addition, or alternatively, in some implementations, system 100 may utilize a local area broadcast method, such as User Datagram Protocol (UDP) or Bluetooth, for instance. Furthermore, in some implementations, system 100 may be implemented virtually, such as in a data center. For example, in some implementations, system 100 may be implemented in software, or as virtual machines. Moreover, in some implementations, communication network 140 may be a high-speed network suitable for high performance computing (HPC), for example a 10 GigE network or an Infiniband network.

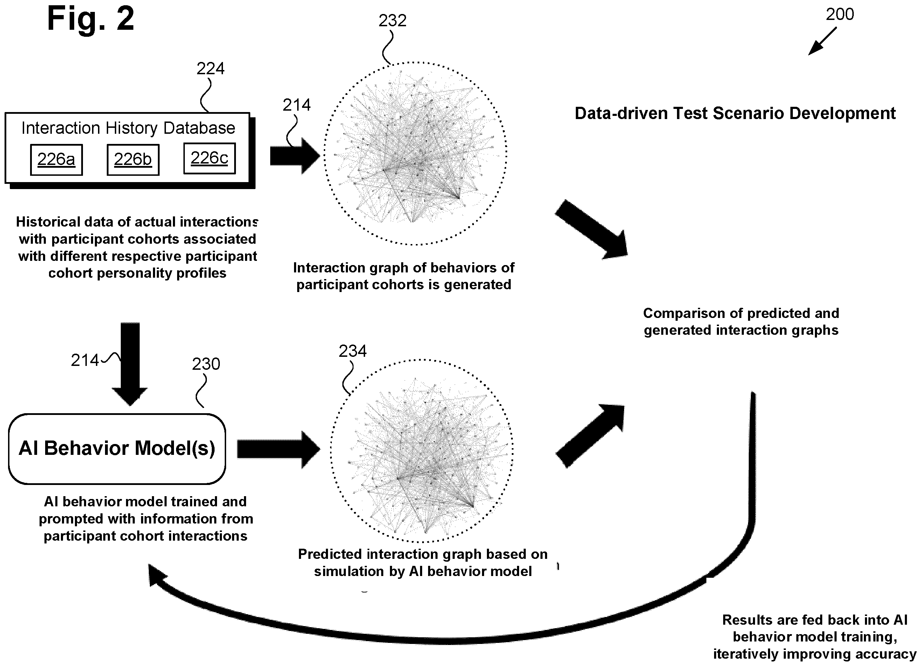

Figure 2 shows exemplary diagram 200 depicting multi-sourced ML model-based AI character training prior to deployment of a trained AI character, according to one implementation. According to the exemplary data-driven test scenario development implementation shown in Figure 2, interaction data 214 is extracted from interaction history database 224 storing interaction histories 226a, 226b and 226c.

Interaction data 214 may be used to generate interaction graph 232 of the behaviors of the participant cohorts during their interactions with the previously deployed AI characters. In addition, interaction data 214 may be provided as training inputs to one of AI behavior model(s) 230. That AI behavior model, trained using interaction data 214, may then be used to simulate the behaviors of the participation cohorts represented by interaction data 214, to provide predicted interaction graph 234 of the behavior of the participant cohorts. Predicted interaction graph 234 may then be compared to generated interaction graph 232 to identify a similarity score for predicted interaction graph 234 relative to generated interaction graph 232.

In use cases in which the similarity score identified by comparison of predicted interaction graph 234 with generated interaction graph 232 satisfies a similarity criterion, which may be predetermined for example, the trained AI behavior model may be used as is to train a new AI character for deployment as an interactive AI character. However, in use cases in which that similarity score fails to satisfy the similarity criterion, the AI behavior model may be modified based on one or more differences between predicted interaction graph 234 and generated interaction graph 232, the modified AI behavior model may be used to perform a simulation that provides a new predicted interaction graph, and the new predicted interaction graph may be compared to generated interaction graph 232. That process may be repeated until comparison of a predicted interaction graph with generated interaction graph 232 satisfies the similarity criterion, at which juncture the AI behavior model, having been modified one or more times, may be used to train the new AI character for interactions.

It is noted that interaction data 214, interaction history database 224 storing interaction histories 226a, 226b and 226c and AI behavior model(s) 230, in Figure 2, correspond respectively in general to interaction data 114, interaction history database 124 storing interaction histories 126a, 126b and 126c and AI behavior model(s) 130, in Figure 1. Consequently, interaction data 214, interaction history database 224, interaction histories 226a, 226b and 226c and AI behavior model(s) 230 may share any of the characteristics attributed to respective interaction data 114, interaction history database 124, interaction histories 126a, 126b and 126c and AI behavior model(s) 130 by the present disclosure, and vice versa. Thus, for example, like AI behavior model(s) 130 AI behavior model(s) 230 may be or include one or more multimodal foundation models and/or one or more large-language models.

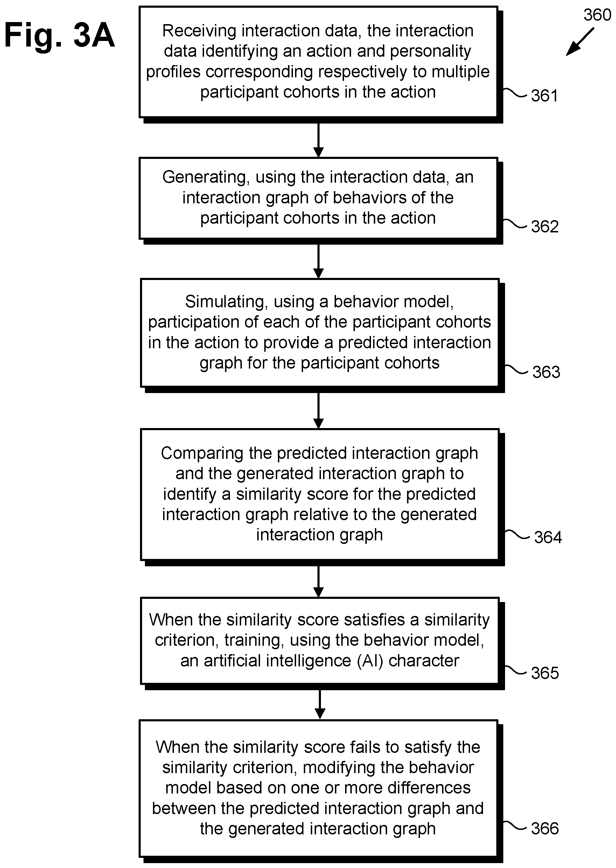

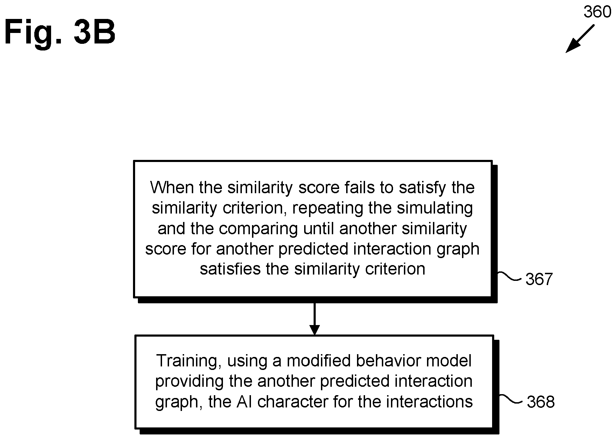

The process depicted by diagram 200 in Figure 2, as well as the functionality of software code 110, when executed by hardware processor 104 of system 100, in Figure 1, will be further described by reference to Figures 3A and 3B. Figure 3A shows flowchart 360 presenting an exemplary method for method for performing multi-sourced ML model-based AI character training prior to deployment of a trained AI character, according to one implementation, while Figure 3B shows additional actions for extending the method outlined in Figure 3A, according to one implementation. With respect to the method outlined in Figures 3A and 3B, it is noted that certain details and features have been left out of flowchart 360 in order not to obscure the discussion of the inventive features in the present application.

Referring to Figure 3A, with further reference to Figures 1 and 2, flowchart 360 includes receiving interaction data 114/214, interaction data 114/214 identifying an action and personality profiles corresponding respectively to multiple participant cohorts in the action (action 361). In various use cases, the action identified by interaction data 114/214 may include one or more of the same speech directed at each of the participant cohorts and a same event engaged in by each of the participant cohorts.

In use cases in which the action identified by interaction data 114/214 includes a same event engaged in by each of the participant cohorts, such an event may take the form of entry into a room, cruise ship cabin, or other venue, and/or physical interaction with one or more objects in such a venue by each of the participant cohorts. For example, an action may include entering a hotel room or cruise ship cabin, occupying a piece of furniture situated therein, and turning on or off an electronics device, such as a television (TV) or stereo for example.

In some implementations, the personality profiles corresponding respectively to the multiple participant cohorts in the action identified in action 361 may be included among participant cohort personality profiles 122a, 122b, 122c and 122d stored in participant cohort personality profile database 120. As noted above, those participant cohort personality profiles may include multiple personality types or personas (e.g., introversion versus extroversion), as well as, in some implementations, real or simulated previous interactions of an individual with one or more AI characters.

In some implementations, as shown in Figure 1, interaction data 114/214 may be received as a data transfer from interaction history database 124/224 of system 100, in action 361, by software code 110, executed by hardware processor 104. However, it is noted that in some implementations, interaction history database 124/224 may not be stored in system memory 106 of system 100, but may be a remote data storage resource accessible by system 100 via communication network 140 and network communication links 142.

It is noted that in some implementations, hardware processor 104 may execute software code 110 to generate one or more new participant cohort personality profiles. By way of example, where interaction data 114/214 ascribes behavior to a participant cohort that does not reasonably match an existing one of participant cohort personality profiles 122a, 122b, 122c and 122d, software code 110, when executed by hardware processor 104, may generate a new participant cohort personality profile using that novel behavior. It is further noted that subsequent to generating such a new participant cohort personality profile, that new participant cohort personality profile may be persistently stored in participant cohort personality profile database 120 with participant cohort personality profiles 122a, 122b, 122c and 122d.

In some use cases, interaction data 114/214 may further describe a context for the action identified by interaction data 114/214. As noted above, such a context for an action can refer to activities engaged in by a particular participant cohort previous to or concurrently with the action identified by interaction data 114/214, the goal or motivation of that particular participant cohort, environmental factors such as weather and location, and the subject matter of an ongoing communication with the participant cohort.

Continuing to refer to Figure 3A in combination with Figures 1 and 2, flowchart 360 further includes generating, using interaction data 114/214, interaction graph 232 of behaviors of the participant cohorts in the action (action 362). Interaction graph 232 generated in action 362 may take the form of a multi-dimensional node-edge graph including edges representing relationships among nodes. According to one implementation, each node may correspond to the behavior of an AI character that was observed by participant cohorts, and each edge may represent participant cohort behavior. For example, the color or size of a node can represent how often a particular AI character behavior was observed, while the edges may represent how the next AI character behavior was triggered, with thicker edges representing participant cohort behaviors that are displayed more prominently. It is noted that different colors or edge line depictions (e.g., dotted vs. solid vs. dashed) can help to visually represent different participant cohorts.

As noted above, in some implementations, participant cohort personality database 120 will typically store tens, hundreds, or thousands of participant cohort personality profiles, while interaction history database 124/224 will typically store hundreds or thousands of interaction histories. Moreover, and as further noted above, each participant cohort may include a particular human individual, an individual AI character, or a group of humans and/or AI characters sharing communication habits or traits that are idiosyncratic or otherwise characteristic of that participant cohort. Thus, interaction graph 232 generated in action 362 may represent the same speech being directed to each of thousands of participant cohorts, or may represent the same event engaged in by each of those thousands of participant cohorts. Action 362 may be performed by software code 110, executed by hardware processor 104 of system 100.

Continuing to refer to Figure 3A in combination with Figures 1 and 2, flowchart 360 further includes simulating, using AI behavior model(s) 130/230, participation of each of the participant cohorts in the action identified by interaction data 114/214, to provide predicted interaction graph 234 for the participant cohorts (action 363). Like interaction graph 232 generated in action 362, predicted interaction graph 234 may take the form of a multi-dimensional node-edge graph including edges representing relationships among nodes. In predicted interaction graph 234, each edge may correspond to the predicted behavior of one of the participant cohorts during an interaction.

In addition, in some implementations each of some or all of the edges included in predicted interaction graph 234 may identify an intent, e.g., a goal motivating a behavior, of one or more of the participant cohorts represented by predicted interaction graph 234. Moreover, in some implementations each of some or all of the edges included in predicted interaction graph 234 may further identify one or more of an utterance, a facial expression, or a gesture attributed to one or more of the participant cohorts represented by predicted interaction graph 234.

It is noted that, analogously to action 362 described above, action 363 may include simulating the same speech being directed to each of thousands of participant cohorts, or may include simulating the same event engaged in by each of those thousands of participant cohorts. Action 363 may be performed by software code 110, executed by hardware processor 104 of system 100, and using AI behavior model(s) 130/230, which, as noted above, may be or include one or more multimodal foundation models and/or one or more large-language models. It is further noted that although flowchart 360 lists action 363 as following action 362, that representation is merely exemplary. In various implementations, action 363 may precede action 362, may follow action 362, or may be performed in parallel with, i.e., contemporaneously with, action 362.

Continuing to refer to Figure 3A in combination with Figures 1 and 2, flowchart 360 further includes comparing predicted interaction graph 234 and generated interaction graph 232 to identify a similarity score for predicted interaction graph 234 relative to generated interaction graph 232 (action 364). In some implementations, for example, the similarity score identified in action 364 may be expressed as a percentage, where identical interaction graphs would result in a similarity score of one hundred percent (100%). By way of example, the comparison performed in action 364 may compare the number of outgoing and incoming edges per node, as well as the weights applied to the edges (those weights depicted in the graphs by the respective thicknesses of the edges). In addition, a coherence score may be assigned based on the overall plausibility of the pathways through the predicted interaction graph 234, to ensure that predicted interaction graph 234 simulated the cumulative interactions correctly. Action 364 may be performed by software code 110, executed by hardware processor 104 of system 100.

Continuing to refer to Figure 3A in combination with Figures 1 and 2, flowchart 360 further includes, when the similarity score identified in action 364 satisfies a similarity criterion, which may be a predetermined criterion for example, training, using AI behavior model(s) 130/230, an AI character, such as one of AI characters 154a or 154b, for interactions (action 365). It is noted that performance of action 365 is contingent on the similarity score identified in action 364 satisfying a similarity criterion. In use cases in which the similarity score fails to satisfy the similarity criterion, action 365 is not performed. However, when the similarity criterion is satisfied by the similarity score identified in action 364, action 365 may be performed by software code 110, executed by hardware processor 104 of system 100, and using AI behavior model(s) 130/230.

Continuing to refer to Figure 3A in combination with Figures 1 and 2, flowchart 360 may include, when the similarity score identified in action 364 fails to satisfy the similarity criterion, modifying AI behavior model(s) 130/230 based on one or more differences between predicted interaction graph 234 and generated interaction graph 232 (action 366). It is noted that action 366 only occurs when the similarity score identified in action 364 fails to satisfy the similarity criterion. Otherwise, the method outlined by flowchart 360 terminates with action 365 described above.

In various implementations, the one or more differences between predicted interaction graph 234 and generated interaction graph 232 may include one or more of edges omitted from predicted interaction graph 234 that are present on generated interaction graph 232, edges present on predicted interaction graph 234 that are absent from generated interaction graph 232, and disparities in weights assigned to edges common to both predicted interaction graph 234 and generated interaction graph 232. Action 366, when included in the method outlined by flowchart 360, may be performed by software code 110, executed by hardware processor 104 of system 100.

As noted above, Figure 3B shows additional actions for extending the method outlined in Figure 3A, according to one implementation. Referring to Figure 3B in combination with Figures 1, 2 and 3A, in some implementations, flowchart 360 may further include, when the similarity score identified in action 364 fails to satisfy the similarity criterion, repeating the simulating and the comparing of actions 363 and 364 until another similarity score for another predicted interaction graph satisfies the similarity criterion (action 367). Action 367, when included in the method outlined by flowchart 360, may be performed by software code 110, executed by hardware processor 104, and using iteratively modified AI behavior model(s).

Continuing to refer to Figures 1, 2, 3A and 3B in common, in implementations in which action 367 is performed, flowchart 360 further includes training, using a modified AI behavior model providing the other predicted interaction graph satisfying the similarity criterion, the AI character, such as one of AI characters 154a or 154b, for the interactions (action 368). Action 368, when included in the method outlined by flowchart 360, may be performed by software code 110, executed by hardware processor 104, and using the modified AI behavior model providing the other predicted interaction graph satisfying the similarity criterion.

With respect to the method outlined by Figures 3A and 3B, it is emphasized that actions 361, 362, 363 and 364 (hereinafter "actions 361-364"), as well as action 365, or actions 361-364 and 366, or actions 361-364, 366, 367 and 368, may be performed in an automated process from which human involvement may be omitted.

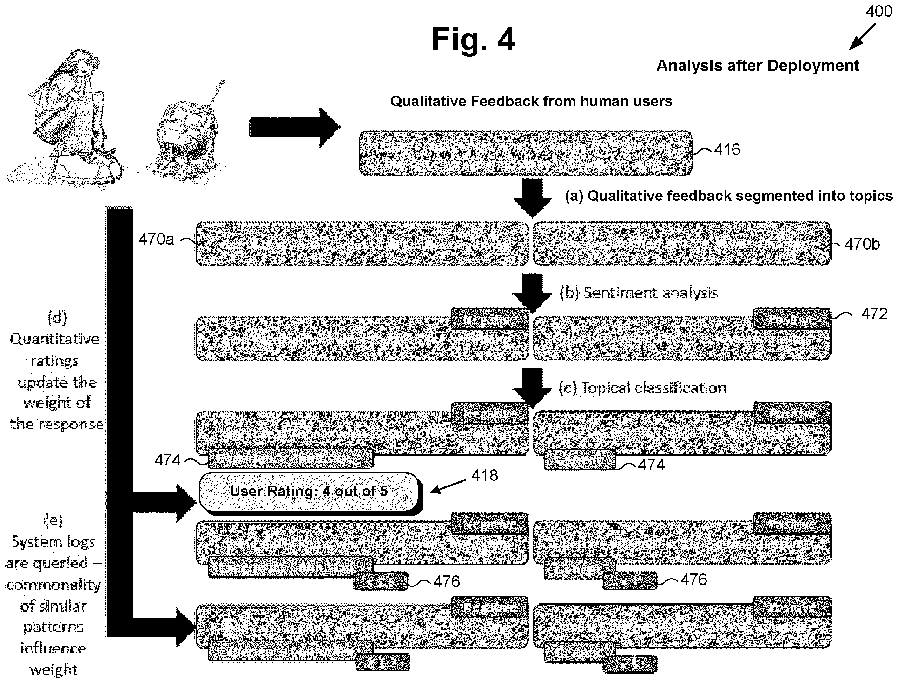

Figure 4 shows exemplary diagram 400 depicting multi-sourced ML model-based AI character training and development after deployment of a trained AI character, according to one implementation. It is noted that diagram 400 is representative of an iterative coding process using qualitative feedback 416, such as language based feedback for example, from human users having interacted with the AI character trained and deployed according to the process described above by reference to Figures 3A and 3B. That iterative coding process may be automatically performed by trained ML model(s) 128 in Figure 1, such as one or more multimodal foundation models and/or one or more large-language models for example. Qualitative feedback 416 from the human users may then be combined with quantitative feedback data 418 from the human users rating their interactions with the AI character, as well as internal measures of system success, such as unrecognized conversational turns, executed path length, detecting unintentional conversational loops, and participation in portions of an interaction designated as critical or emotionally powerful.

In so far as human users often give a variety of reasons with different emotional valance in the response in which qualitative feedback 416 is provided, the full response is parsed into segments 470a and 470b with separate segments defined by linguistic information like syntax and pause length (for spoken responses), such that each segment 470a and 470b contains only one interaction specific topic, as shown by section (a) of Figure 4. One or more of trained ML model(s) 128 may then be used for sentiment analysis to classify sentiment 472 of each segment of the individual human user responses as positive, negative or neutral, as shown by section (b) of Figure 4, where "neutral" means stating facts without any detected emotional valence.

Next, positive and negative responses may be classified separately into topical codes 474, as shown by section (c) of Figure 4. Those topical codes 474, the hierarchy of topical codes 474 and definitions of the individual topical codes 474 can be defined in an iterative process based on one or both of data observed in the system and input from human system experts. It is noted that automated system based monitoring of AI character interaction quality is described in detail in the disclosure provided by U.S. Patent Application Serial No. 17/325,676, filed May 20, 2021, and titled "Automated Social Agent Interaction Quality Monitoring and Improvement," which is hereby incorporated fully by reference into the present application. It is further noted that sentiment classification as one of positive, neutral, or negative, as described above, is merely provided by way of example. In other implementations, any general sentiment classification of interest (e.g., frustration, confusion) can be used, and topical codes can be applied to those classifications.

The step of response classification may include an analysis of a graph of the interaction by the human user with the AI character that reveals what part of the interaction the human user participated in and in what order. An ML model included among trained ML model(s) 128, such as a multimodal foundation model or large-language model, can also be used to produce an automatic summary of all responses that are presently sorted into a specific class, and if a human system expert or algorithm determines that the summary contains too many diverse topics, these can be used for a further level of more detailed classification. The output of the trained ML model producing the summary can be used to quantify how often certain shortcomings of the AI character interaction were mentioned and how often parts of the interactive experience with the AI character were praised.

Together with quantitative feedback data 418 of the AI character interaction optionally provided by the human user, a weight 476 can be applied to each topical code 474, so that topical codes that coincided often with very negative or very positive ratings are weighted more strongly compared to topical codes that were mentioned more often but had little or no influence on the ratings provided by the human users having interacted with the AI character. This aspect of the process is shown by section (d) of Figure 4.

In a final step, the observed system behavior can be matched against topical codes 474 generated by the system, as shown by section (e) of Figure 4. For example, for all human users who complained that they were not understood by the AI character, the system logs of the AI character may be analyzed and the internal measures of success of the language understanding unit of the AI character may be extracted. Then, the system can search for similar patterns in all logs of interactions by the AI character with other human users who have not mentioned that specific deficiency in their interactions with the AI character. The weight 476 applied to a topical code 474 may then be adjusted such that a problem that has a high overlap between occurrence of the problem and the problem being addressed by human users is weighted more strongly than an interaction deficiency that is present in many interactions but is seldom identified by human users as a deficiency. Similarly, if a feature of an interaction occurred only rarely but was consistently identified as a human user favorite, the corresponding topical code may receive a stronger positive weight. The outcome of the process depicted in Figure 4 is a weighted set of the most favorite and least favorite aspects of human user interactions with the deployed AI character.

It is noted that qualitative feedback 416 corresponds in general to a single instance of qualitative feedback 116 in Figure 1, while quantitative feedback data 418 corresponds in general to a single instance of quantitative feedback data 118 in that previous figure. Consequently, qualitative feedback 116 and qualitative feedback data 118 may share any of the characteristics attributed to qualitative feedback 416 and qualitative feedback data 418 by the present disclosure, and vice versa.

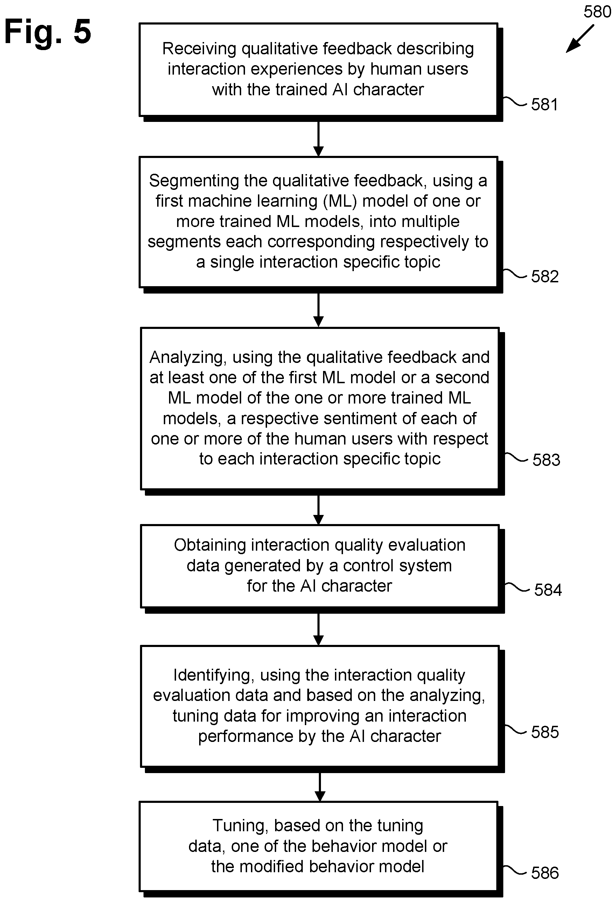

The process depicted by diagram 400 in Figure 4, as well as the functionality of software code 110, when further executed by hardware processor 104 of system 100, in Figure 1, will be described below by reference to Figure 5. Figure 5 shows flowchart 580 presenting an exemplary method for performing multi-sourced ML model-based AI character training and development after deployment of a trained AI character, according to one implementation. With respect to the method outlined in Figure 5, it is noted that certain details and features have been left out of flowchart 580 in order not to obscure the discussion of the inventive features in the present application.

Referring to Figure 5, with further reference to Figures 1 and 4, flowchart 580 includes receiving qualitative feedback 116/416 describing interaction experiences by human users 112 with a trained AI character, such as one of AI characters 154a or 154b (action 581). As shown by section (a) of Figure 4, qualitative feedback 116/416 may be or include a language based qualitative description of an interaction experience of each of human users 112 with the AI character. For example, and as further shown in Figure 4, qualitative feedback 116/416 may include a descriptive statement such as: "I didn't really know what to say in the beginning, but once we warmed up to it, it was amazing." Qualitative feedback 116/416 may be received from human users 112 via communication network 140 and network communication links 142, in action 581, by software code 110, executed by hardware processor 104 of system 100.

Continuing to refer to Figure 5 in combination with Figures 1 and 4, flowchart 580 further includes segmenting qualitative feedback 116/416, using a first ML model of trained ML model(s) 128, into segments 470a and 470b each corresponding respectively to a single interaction specific topic (action 582). As shown in Figure 4, qualitative feedback 116/416 including the statement "I didn't really know what to say in the beginning, but one we warmed up to it, it was amazing" can be segmented into segment 470a corresponding to the interaction specific topic "I didn't really know what to say in the beginning," as well as into segment 470b corresponding to the interaction specific topic "Once we warmed up to it, it was amazing." Segmentation of qualitative feedback 116/416 into segments 470a and 470b, in action 582, may be performed by software code 110, executed by hardware processor 104 of system 100, and using an ML model included among trained ML model(s) 128.

Continuing to refer to Figure 5 in combination with Figures 1 and 4, flowchart 580 further includes analyzing, using qualitative feedback 116/416 and at least one of the first ML model used in action 582 or a second ML model of trained ML model(s) 128, a respective sentiment 472 of each of one or more of human users 112 with respect to each interaction specific topic (action 583). For example, and as shown in Figure 4, sentiment 472 of the interaction specific topic "Once we warmed up to it, it was amazing," is determined to be positive as the result of the analysis performed in action 583, while the sentiment of the interaction specific topic "I didn't really know what to say in the beginning" is determined to be negative. As noted above, a sentiment of "neutral" may be determined for an interaction specific topic that merely states facts without signaling any particular emotional valence. The analysis in action 583 may be performed by software code 110, executed by hardware processor 104 of system 100, and using an ML model included among trained ML model(s) 128.

Continuing to refer to Figure 5 in combination with Figures 1 and 4, flowchart 580 further includes obtaining interaction quality evaluation data 117 generated by a control system for the AI character (action 584). Interaction quality evaluation data 117 may include data included in the system logs of the AI character, as well as the internal measures of success of the language understanding unit of the AI character, and in some implementations, the internal measures of success of the physical interaction understanding unit of the AI character. Interaction quality evaluation data 117 may be obtained, in action 584, by software code 110, executed by hardware processor 104 of system 100.

Continuing to refer to Figure 5 in combination with Figures 1 and 4, flowchart 580 further includes identifying, using interaction quality evaluation data 117 and based on the analysis performed in action 583, tuning data for improving the interaction performance by the AI character (action 585). In some implementations, as noted above by reference to Figures 1 and 4, the feedback provided by human users 112 may include quantitative feedback data 118/418 in the form of numerical ratings of interactions with the AI character provided by at least some of human users 112. Such a numerical rating may be based on a range of numbers from one to five, with five being the highest rating for example, or from one to ten, with ten being the highest rating. Thus, in some implementations, hardware processor 104 may further execute software code 110 to receive quantitative feedback data 118/418 from human users 112, via communication network 140 and network communication links 142 for example. In those implementations, identification of the tuning data in action 585 may further make use of quantitative feedback data 118/418. Action 585 may be performed by software code 110, executed by hardware processor 104 of system 100.

Continuing to refer to Figure 5 in combination with Figures 1 and 4, and with further reference to Figure 2, flowchart 580 also includes tuning, based on the tuning data, AI behavior model(s) 130/230 trained in action 365 of flowchart 360, or tuning the modified AI behavior model trained in action 368 (action 586). The AI behavior model tuning, in action 586 may be performed by software code 110, executed by hardware processor 104 of system 100. With respect to the tuning data upon which tuning of AI behavior model(s) 130/230 is based in action 586, in some implementations, as noted above, that tuning data may be identified in an automated process by software code 110, executed by hardware processor 104 of system 100. However, in other implementations, the tuning data may be human generated or may be modified by a human after a preliminary identification of the tuning data by software code 110 in action 585.

Thus, system 100 can directly use the quantitative and/or qualitative feedback provided by human users 112 to update the interaction content and interactive performance of the AI character, by periodically updating and improving the AI behavior model used to train the AI character for interactions. Moreover, new interactions can feed back into the development of simulated behaviors by human users so as to advantageously make testing of the AI behavior model increasingly reliable over time. With respect to the method outlined by flowchart 580, it is emphasized that actions 581 through 586 may be performed in an automated process from which human involvement, other than the provision of quantitative and/or qualitative feedback by human users interacting with the AI character, may be omitted.

Thus, the present application discloses systems and methods for performing multi-sourced ML model-based AI character training and development. It is noted that although multi-sourced ML model-based training and development solution disclosed by the present application is described above by reference to the specific use case of training, deploying, and providing ongoing development of an interactive AI character, the present concepts can also be applied more generally. For example, the present multi-sourced ML model-based training and development solution may be applied to the evaluation and improvement of substantially any type of interactive user experience that produces internal logs of interaction successes and interaction deficiencies, as well as respective graph-based representations of the evolution of user interactions.

From the above description it is manifest that various techniques can be used for implementing the concepts described in the present application without departing from the scope of those concepts. Moreover, while the concepts have been described with specific reference to certain implementations, a person of ordinary skill in the art would recognize that changes can be made in form and detail without departing from the scope of those concepts. As such, the described implementations are to be considered in all respects as illustrative and not restrictive. It should also be understood that the present application is not limited to the particular implementations described herein, but many rearrangements, modifications, and substitutions are possible without departing from the scope of the present claims.

## Claims

1. A method comprising:
receiving interaction data, the interaction data identifying an action and a plurality of personality profiles corresponding respectively to a plurality of participant cohorts in the action;
generating, using the interaction data, an interaction graph of behaviors of the plurality of participant cohorts in the action;
simulating, using a behavior model, participation of each of the plurality of participant cohorts in the action to provide a predicted interaction graph for the plurality of participant cohorts;
comparing the predicted interaction graph and the generated interaction graph to identify a similarity score for the predicted interaction graph relative to the generated interaction graph;
when the similarity score satisfies a similarity criterion, training, using the behavior model, an artificial intelligence (AI) character for interactions; and
when the similarity score fails to satisfy the similarity criterion, modifying the behavior model, based on one or more differences between the predicted interaction graph and the generated interaction graph.

2. The method of claim 1, further comprising:
when the similarity score fails to satisfy the similarity criterion, repeating the simulating and the comparing until another similarity score for another predicted interaction graph satisfies the similarity criterion; and
training, using a modified behavior model providing the another predicted interaction graph, the AI character for the interactions.

3. The method of claim 1 or 2, wherein the action comprises at least one of a same speech directed at each of the plurality of participant cohorts or a same event engaged in by each of the plurality of participant cohorts, and wherein the predicted interaction graph includes a plurality of edges each identifying an intent of one or more of the plurality of participant cohorts.

4. The method of claim 3, wherein the plurality of edges each further identifies at least one of an utterance, a facial expression, or a gesture attributed to one or more of the plurality of participant cohorts.

5. The method of at least one of claims 1 to 4, wherein the behavior model comprises at least one of a multimodal foundation model or a large-language model.

6. The method of at least one of claims 1 to 5, further comprising:
receiving qualitative feedback describing a plurality of interaction experiences by a plurality of human users with the trained AI character;
segmenting the qualitative feedback, using a first machine learning (ML) model of a plurality of trained ML models, into a plurality of segments each corresponding respectively to a single interaction specific topic;
analyzing, using the qualitative feedback and at least one of the first ML model or a second ML model of the plurality of trained ML models, a respective sentiment of each of one or more of the plurality of human users with respect to each interaction specific topic;
obtaining interaction quality evaluation data generated by a control system for the AI character;
identifying, using the interaction quality evaluation data and based on the analyzing, tuning data for improving an interaction performance by the AI character; and
tuning, based on the tuning data, one of the behavior model or the modified behavior model.

7. The method of claim 6, further comprising:
receiving quantitative feedback data rating the plurality of interaction experiences by the plurality of human users with the trained AI character;
wherein identifying the tuning data further uses the quantitative feedback data.

8. A system comprising a hardware processor and a system memory storing a software code, the hardware processor being adapted to execute the software to perform the method of any of claims 1-7.
